# EUROPEAN PATENT SPECIFICATION

(11) **EP 4 145 196 B1**
(45) Date of publication and mention of the grant of the patent: **24.09.2025**
(21) Application number: 20888741.4
(22) Date of filing: 02.11.2020
(51) Int. Cl.: G02B 6/036, G02B 6/028

(54) **OPTICAL FIBER**
GLASFASER
FIBRE OPTIQUE

(30) Priority: 26.04.2020 CN 202010340222
(43) Date of publication of application: 08.03.2023
(73) Proprietor: Zhongtian Technology Fiber Potics Co., Ltd, Economic Development Zone Nantong City Jiangsu 226000 (CN); Jiangsu Zhongtian Technology Co., Ltd., Nantong, Jiangsu 226463 (CN); Jiangdong Science and Technology Co., Ltd, Rudong County Economic Development Zone Nantong Jiangsu 226400 (CN); Zhongtian Technology Advanced Materials Co., Ltd., Jiangsu 226010 (CN)
(72) Inventor: CAO, Shanshan, Jiangsu 226000 (CN); LIU, Zhizhong, Jiangsu 226000 (CN); SHEN, Yichun, Jiangsu 226010 (CN); JIANG, Xinli, Jiangsu 226010 (CN); WANG, Zhen, Nantong Jiangsu 226000 (CN); XU, Haitao, Nantong Jiangsu 226000 (CN); QIAN, Yigang, Jiangsu 226010 (CN); XUE, Chi, Jiangsu 226463 (CN); SU, Haiyan, Jiangsu 226000 (CN)
(74) Representative: Zaboliene, Reda
(86) International application number: PCT/CN2020/125941
(87) International publication number: WO 2021/218094

(56) References cited:
- WO-A1-2011/147272
- CN-A- 103 048 732
- CN-A- 106 662 705
- CN-A- 109 839 694
- CN-A- 110 488 411
- CN-A- 111 458 789
- US-A1- 2005 185 906
- US-A1- 2010 158 460
- US-A1- 2013 094 824
- US-A1- 2013 230 290
- US-A1- 2014 248 026
- US-A1- 2016 170 137
- US-A1- 2017 017 032
- US-A1- 2018 052 280
- US-B1- 6 393 189
- US-B1- 7 676 129

## Description

### FIELD

The disclosure relates to communication technology, and more particularly, to an optical fiber.

### BACKGROUND

General-purpose optical fiber can be used in long-distance trunk lines, local area network construction, FTTX to home construction, etc. The general-purpose optical fiber can replace original optical fibers in different regions. The general-purpose optical fiber is compatible with G652 single-mode optical fiber and G657 single-mode optical fiber.

In an existing single-mode optical fiber, the G652 single-mode optical fiber is generally used in a long-distance transmission and a LAN construction, which has low cost and many early applications. The G652 single-mode optical fiber used in a new construction can achieve a maximum compatibility with an original optical fiber. In the LAN construction and an access network construction, the G657 single-mode optical fiber has good bending resistance and is more suitable for different complex environments. However, in the LAN construction, two kinds of optical fibers need to be jointed together to construct a circuit. For example, a mode field diameter (MFD) of G652 single-mode optical fiber is 9.2 ± 0.5 µm, while a mode field diameter of G657 single-mode optical fiber is 8.6 ± 0.5 µm. The difference of the mode field diameters between the two kinks of optical fiber results in large splice loss. The large splice loss may have adverse effect on the circuit.

US20130094824A1 relates to an extreme bending insensitive optical fiber. The optical fiber includes a core comprising a maximum refractive index difference Δn1 in the optical fiber, an inner layer comprising a refractive index difference Δn2 that is smaller than the maximum refractive index of the core and decreases in a direction away from the core, the inner layer being positioned outside the core, and a trench layer comprising an inner-circumference refractive index difference Δn3 that is smaller than the refractive index difference of the inner layer and an outer-circumference refractive index difference Δn4 that is a minimum refractive index difference in the optical fiber.

### SUMMARY

The invention provides an optical fiber according to independent claim 1. Further embodiments are provided by the dependent claims.

The optical fiber of the present disclosure has the large mode field diameter of 8.7 to 9.5 µm and good bending resistance. The macrobending loss of the optical fiber can reach the level of G657 optical fiber. When the optical fiber has the radius of 15 mm, the macrobending loss is less than or equal to 0.03 dB at the wavelength of 1550 nm, and the macrobending loss is less than or equal to 0.1 dB at the wavelength of 1625 nm. The optical fiber can achieve a fully compatibility with G652 optical fiber and G657 optical fiber. The outer diameter of the optical fiber can form different series of outer diameter, such as 245 µm, 200 µm and 180 µm, to meet multiple applications.

### BRIEF DESCRIPTION OF THE DRAWING

Implementations of the disclosure will now be described, with reference to the drawing.
FIG. 1 is a diagram showing refractive index distribution on a cross section of an embodiment of an optical fiber.
FIG. 2 is a diagrammatic view of an embodiment of an optical fiber.

Description of names of main elements:
Optical fiber 100
Core layer 1
Buffer cladding layer 3
Recessed cladding layer 5
Deep fluorine doped layer 7
External cladding layer 9

### DETAILED DESCRIPTION OF THE DISCLOSURE

Implementations of the disclosure will be described by way of embodiments. It should be noted that non-conflicting details and features in a plurality of embodiments of the present disclosure may be combined with each other.

The disclosure is illustrative only, and changes may be made in the detail within the principles of the present disclosure. It will, therefore, be appreciated that the embodiments may be modified within the scope of the claims.

"Outer diameter" in the present disclosure refers to the farthest distance between a outer boundaries of a structural layer.

"Outer radius" in the present disclosure refers to a distance between a outer boundary and a central axis of the core layer of a structural layer.

Unless otherwise defined, all technical terms used herein have the same meaning as commonly understood by one of ordinary skill in the art.

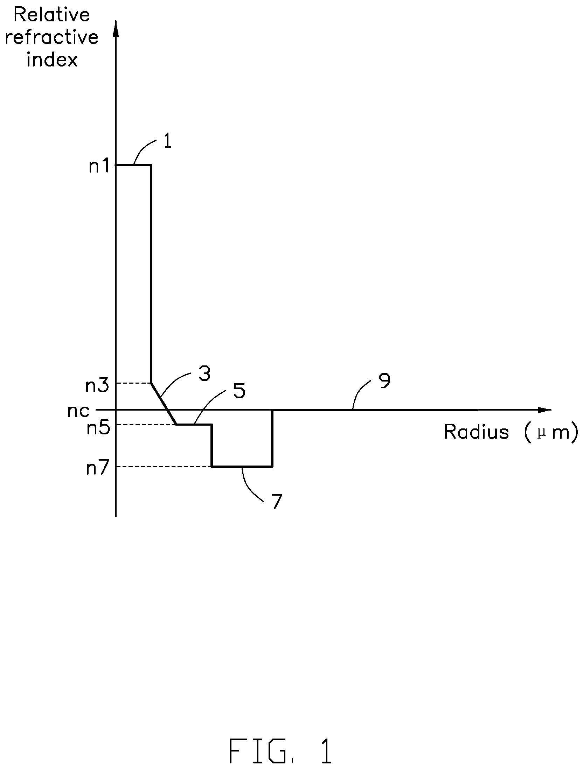

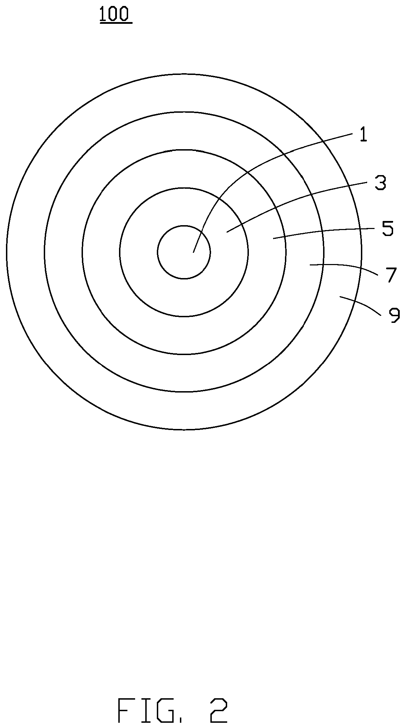

FIGS. 1 and 2 illustrate an optical fiber 100 according to the present disclosure. The optical fiber 100 includes, from inside to outside, a core layer 1, a buffer cladding layer 3, a recessed cladding layer 5, a deep fluorine doped layer 7, an external cladding layer 9, and a coating layer. A refractive index difference n1 between the core layer 1 and silica is 0.37 % to 0.5 %. A refractive index of the buffer cladding layer 3 gradual changes along the buffer cladding layer 3. A refractive index difference between an internal interface of the buffer cladding layer 3 contacting with the core layer 1 and silica is -0.05 % to 0.1 %. A refractive index of an external interface of the buffer cladding layer 3 contacting with the recessed cladding layer 5 is equal to a refractive index of the recessed cladding layer 5. A refractive index difference n5 between the recessed cladding layer 5 and silica is -0.12 % to -0.2 %. A refractive index difference n7 between the deep fluorine doped layer 7 and silica is -0.3 % to -0.5 %. The external cladding layer 9 is silica and a refractive index thereof is defined as nc. The coating layer is coated outside the external cladding layer 9. In some embodiments, the refractive indexes of the recessed cladding layer 5 and deep fluorine doped layer 7 shown in FIG. 1 can be controlled by adding a first dopant in silica. The first dopant such as fluorine and boron are usually used. In some embodiments, the refractive indexes of the buffer cladding layer 3 shown in FIG. 1 can be achieved by adding a second dopant or a combination of the first dopant and the second dopant in silica. The second dopant such as germanium, chlorine, phosphorus, aluminum, and titanium are usually used. In other embodiments, the core layer 1 can also use a mixture of the second dopants containing germanium to control the refractive indexes of the silica glasses or use other equivalent dopants with the second dopant to control the refractive indexes of the silica glasses.

In an embodiment, the radius of the core layer 1 is 4.1 µm to 4.7 µm, the thickness of the buffer cladding layer 3 is 3 µm to 5 µm, the thickness of the recessed cladding layer 5 is 6 µm to 10 µm, the thickness of the deep fluorine doped layer 7 is 10 µm to 20 µm, and the thickness of the external cladding layer 9 is 22.8 µm to 39.4 µm.

In an embodiment, the non-circularity of the core layer 1 is less than or equal to 1 %, and the overall non-circularity from the core layer 1 to the external cladding layer 9 is less than or equal to 0.4 %.

In an embodiment, the coating layer is made of polyacrylate.

In a first embodiment, the coating layer comprises the inner coating layer and the outer coating layer. The non-circularity of the inner coating layer is less than or equal to 6 %. The outer diameter of the outer coating layer is 245 ± 7 µm. And the non-circularity of the outer coating layer is less than or equal to 6 %. In an embodiment, the outer diameter of the inner coating layer is 192 µm, and the non-circularity of the inner coating layer is 0.6 %. The outer diameter of the outer coating layer is 245 µm, and the non-circularity of the outer coating layer is 0.8 %.

In a second embodiment, the coating layer comprises the inner coating layer and the outer coating layer. The non-circularity of the inner coating layer is less than or equal to 6 %. The outer diameter of the outer coating layer is 200 ± 7 µm. And the non-circularity of the outer coating layer is less than or equal to 6 %. In an embodiment, the outer diameter of the inner coating layer is 165 µm, and the non-circularity of the inner coating layer is 0.5 %. The outer diameter of the outer coating layer is 198 µm, and the non-circularity of the outer coating layer is 0.7 %.

In a third embodiment, the coating layer comprises the inner coating layer and the outer coating layer. The non-circularity of the inner coating layer is less than or equal to 6 %. The outer diameter of the outer coating layer is 180 ± 7 µm. And the non-circularity of the outer coating layer is less than or equal to 6 %. In an embodiment, the outer diameter of the inner coating layer is 155 µm, and the non-circularity of the inner coating layer is 0.65 %. The outer diameter of the outer coating layer is 182 µm, and the non-circularity of the outer coating layer is 0.75 %.

From the three embodiments mentioned above, the thickness of the coating layer can be adjusted according to real needs and is not limited to the three embodiments mentioned above. In actual manufacturing process, a preform is manufactured according to the refractive index profile in FIG. 1 firstly, then the preform is melt drawn, cooled, coated, solidified, and taken up in a drawing tower to form the optical fiber 100, and at last the optical fiber 100 is ready for use after passing strength tests and other performance tests. A core diameter of the optical fiber 100 is large. Through a groove design, a bending loss of the optical fiber 100 is reduced which makes it insensitive to the bending loss. In the drawing process, a low bending loss drawing technology is also used to further reduce the bending loss of the optical fiber 100 which makes the bending loss of the final product insensitive. A main consideration of the low bending loss drawing technology is MAC value control method. Through the deployment of MFD and cut-off wavelength parameters to find an optimal matching point. In addition, combining with the coating process and curing process with of low bending loss, the microbending loss of the optical fiber 100 can be controlled, and then the low bending loss can be achieved.

The optical fiber 100 has a large mode field diameter and good bending resistance according to the present disclosure. The experiments show that the mode field diameter of the optical fiber 100 at the wavelength of 1310 nm is 8.7 µm to 9.5 µm. When the optical fiber 100 has a radius of 15 mm and winds ten times, the macrobending loss is less than or equal to 0.03 dB at the wavelength of 1550 nm, and the macrobending loss is less than or equal to 0.1 dB at the wavelength of 1625 nm. When the optical fiber 100 has a radius of 10 mm and winds one time, the macrobending loss is less than or equal to 0.1 dB at the wavelength of 1550 nm, and the macrobending loss is less than or equal to 0.2 dB at the wavelength of 1625 nm. When the optical fiber 100 has a radius of 7.5 mm and winds one time, the macrobending loss is less than or equal to 0.5 dB at the wavelength of 1550 nm, and the macrobending loss is less than or equal to 1 dB at the wavelength of 1625 nm. When the temperature is in the range of 20 °C to 30 °C, and the relative humidity is in the range of 40 % to 60 %, the anti fatigue parameter of the optical fiber 100 is more than 22%.

Structure and characteristics of the optical fiber 100 according to the present disclosure will be described by way of embodiments.

### Example 1

The optical fiber 100 includes, from inside to outside, a core layer 1, a buffer cladding layer 3, a recessed cladding layer 5, a deep fluorine doped layer 7, an external cladding layer 9, and a coating layer.

The core layer 1 is germanium doped silica. A radius of the core layer 1 is 4.15 µm. The non-circularity of the core layer 1 is 0.1 %. The refractive index difference n1 between the core layer 1 and silica is 0.38 %.

The refractive index of the buffer cladding layer 3 is a linear gradient structure. The refractive index difference n3 of the internal interface of the buffer cladding layer 3 contacting with the core layer 1 is -0.05 % relative to the silica. The thickness of the buffer cladding layer 3 is 3 µm.

The refractive index difference n5 between the recessed cladding layer 5 and the silica is -0.13 %. The thickness of the recessed cladding layer 5 is 7 µm.

The thickness of the deep fluorine doped layer 7 is 12 µm. The refractive index difference n7 between the deep fluorine doped layer 7 and the silica is -0.3 % to -0.5 %.

The external cladding layer 9 is pure quartz glass layer. An outer radius of the external cladding layer 9 is 62.5 µm. The non-circularity of the external cladding layer 9 is 0.4 %.

The coating layer is made of polyacrylate. The coating layer comprises the inner coating layer and the outer coating layer. The outer diameter of the inner coating layer is 192 µm when the outer diameter of the optical fiber is 245 µm. The non-circularity of the inner coating layer is 0.6 %. The outer diameter of the outer coating layer is 245 µm. And the non-circularity of the outer coating layer is 0.8 %.

The mode field diameter of the optical fiber 100 at the wavelength of 1310 nm is 8.75 µm. When the optical fiber 100 has a radius of 15 mm and winds ten times, the macrobending loss is less than or equal to 0.03 dB at the wavelength of 1550 nm, and the macrobending loss is less than or equal to 0.1 dB at the wavelength of 1625 nm. When the optical fiber 100 has a radius of 10 mm and winds one time, the macrobending loss is less than or equal to 0.1 dB at the wavelength of 1550 nm, and the macrobending loss is less than or equal to 0.2 dB at the wavelength of 1625 nm. When the optical fiber 100 has a radius of 7.5 mm and winds one time, the macrobending loss is less than or equal to 0.5 dB at the wavelength of 1550 nm, and the macrobending loss is less than or equal to 1 dB at the wavelength of 1625 nm. When the temperature is in the range of 20 °C to 30 °C, and the relative humidity is in the range of 40 % to 60 %, the anti fatigue parameter of the optical fiber 100 is more than 22%.

### Example 2

The optical fiber 100 includes, from inside to outside, a core layer 1, a buffer cladding layer 3, a recessed cladding layer 5, a deep fluorine doped layer 7, an external cladding layer 9, and a coating layer.

The core layer 1 is germanium doped silica. A radius of the core layer 1 is 4.25 µm. The non-circularity of the core layer 1 is 0.14 %. The refractive index difference n1 between the core layer 1 and silica is 0.39 %.

The refractive index of the buffer cladding layer 3 is a linear gradient structure. The refractive index difference n3 of the internal interface of the buffer cladding layer 3 contacting with the core layer 1 is -0.01 % relative to the silica. The thickness of the buffer cladding layer 3 is 3.5 µm.

The refractive index difference n5 between the recessed cladding layer 5 and the silica is -0.12 %. The thickness of the recessed cladding layer 5 is 7 µm.

The thickness of the deep fluorine doped layer 7 is 11 µm. The refractive index difference n7 between the deep fluorine doped layer 7 and the silica is -0.35 %.

The external cladding layer 9 is pure quartz glass layer. The outer radius of the external cladding layer 9 is 62.5 µm. The non-circularity of the external cladding layer 9 is 0.4 %.

The coating layer is made of polyacrylate. The coating layer comprises the inner coating layer and the outer coating layer. The outer diameter of the inner coating layer is 192 µm when the outer diameter of the optical fiber is 245 µm. The non-circularity of the inner coating layer is 0.6 %. The outer diameter of the outer coating layer is 245 µm. And the non-circularity of the outer coating layer is 0.8 %.

The mode field diameter of the optical fiber 100 at the wavelength of 1310 nm is 8.82 µm. When the optical fiber 100 has a radius of 15 mm and winds ten times, the macrobending loss is less than or equal to 0.03 dB at the wavelength of 1550 nm, and the macrobending loss is less than or equal to 0.1 dB at the wavelength of 1625 nm. When the optical fiber 100 has a radius of 10 mm and winds one time, the macrobending loss is less than or equal to 0.1 dB at the wavelength of 1550 nm, and the macrobending loss is less than or equal to 0.2 dB at the wavelength of 1625 nm. When the optical fiber 100 has a radius of 7.5 mm and winds one time, the macrobending loss is less than or equal to 0.5 dB at the wavelength of 1550 nm, and the macrobending loss is less than or equal to 1 dB at the wavelength of 1625 nm. When the temperature is in the range of 20 °C to 30 °C, and the relative humidity is in the range of 40 % to 60 %, the anti fatigue parameter of the optical fiber 100 is more than 22%.

### Example 3

The optical fiber 100 includes, from inside to outside, a core layer 1, a buffer cladding layer 3, a recessed cladding layer 5, a deep fluorine doped layer 7, an external cladding layer 9, and a coating layer.

The core layer 1 is germanium doped silica. A radius of the core layer 1 is 4.5 µm. The non-circularity of the core layer 1 is 0.51 %. The refractive index difference n1 between the core layer 1 and silica is 0.42 %.

The refractive index of the buffer cladding layer 3 is a linear gradient structure. The refractive index difference n3 of the internal interface of the buffer cladding layer 3 contacting with the core layer 1 is -0.04 % relative to the silica. The thickness of the buffer cladding layer 3 is 4 µm.

The refractive index difference n5 between the recessed cladding layer 5 and the silica is -0.16 %. The thickness of the recessed cladding layer 5 is 7.5 µm.

The thickness of the deep fluorine doped layer 7 is 13 µm. The refractive index difference n7 between the deep fluorine doped layer 7 and the silica is -0.4 %.

The external cladding layer 9 is pure quartz glass layer. An outer radius of the external cladding layer 9 is 62.5 µm. The non-circularity of the external cladding layer 9 is 0.35 %.

The coating layer is made of polyacrylate. The coating layer comprises the inner coating layer and the outer coating layer. The outer diameter of the inner coating layer is 165 µm when the outer diameter of the optical fiber is 200 µm. The non-circularity of the inner coating layer is 0.5 %. The outer diameter of the outer coating layer is 198 µm. And the non-circularity of the outer coating layer is 0.7 %.

The mode field diameter of the optical fiber 100 at the wavelength of 1310 nm is 8.98 µm. When the optical fiber 100 has a radius of 15 mm and winds ten times, the macrobending loss is less than or equal to 0.03 dB at the wavelength of 1550 nm, and the macrobending loss is less than or equal to 0.1 dB at the wavelength of 1625 nm. When the optical fiber 100 has a radius of 10 mm and winds one time, the macrobending loss is less than or equal to 0.1 dB at the wavelength of 1550 nm, and the macrobending loss is less than or equal to 0.2 dB at the wavelength of 1625 nm. When the optical fiber 100 has a radius of 7.5 mm and winds one time, the macrobending loss is less than or equal to 0.5 dB at the wavelength of 1550 nm, and the macrobending loss is less than or equal to 1 dB at the wavelength of 1625 nm. When the temperature is in the range of 20 °C to 30 °C, and the relative humidity is in the range of 40 % to 60 %, the anti fatigue parameter of the optical fiber 100 is more than 22%.

### Example 4

The optical fiber 100 includes, from inside to outside, a core layer 1, a buffer cladding layer 3, a recessed cladding layer 5, a deep fluorine doped layer 7, an external cladding layer 9, and a coating layer.

The core layer 1 is germanium doped silica. A radius of the core layer 1 is 4.68 µm. The non-circularity of the core layer 1 is 1 %. The refractive index difference n1 between the core layer 1 and silica is 0.47 %.

The refractive index of the buffer cladding layer 3 is a linear gradient structure. The refractive index difference n3 of the internal interface of the buffer cladding layer 3 contacting with the core layer 1 is -0.09 % relative to the silica. The thickness of the buffer cladding layer 3 is 4 µm.

The refractive index difference n5 between the recessed cladding layer 5 and the silica is -0.18 %. The thickness of the recessed cladding layer 5 is 8 µm.

The thickness of the deep fluorine doped layer 7 is 18 µm. The refractive index difference n7 between the deep fluorine doped layer 7 and the silica is -0.3 % to -0.43 %.

The external cladding layer 9 is pure quartz glass layer. An outer radius of the external cladding layer 9 is 62.5 µm. The non-circularity of the external cladding layer 9 is 0.28 %.

The coating layer is made of polyacrylate. The coating layer comprises the inner coating layer and the outer coating layer. The outer diameter of the inner coating layer is 155 µm when the outer diameter of the optical fiber is 180 µm. The non-circularity of the inner coating layer is 0.65 %. The outer diameter of the outer coating layer is 182 µm. And the non-circularity of the outer coating layer is 0.75 %.

The mode field diameter of the optical fiber 100 at the wavelength of 1310 nm is 9.2 µm. When the optical fiber 100 has a radius of 15 mm and winds ten times, the macrobending loss is less than or equal to 0.03 dB at the wavelength of 1550 nm, and the macrobending loss is less than or equal to 0.1 dB at the wavelength of 1625 nm. When the optical fiber 100 has a radius of 10 mm and winds one time, the macrobending loss is less than or equal to 0.1 dB at the wavelength of 1550 nm, and the macrobending loss is less than or equal to 0.2 dB at the wavelength of 1625 nm. When the optical fiber 100 has a radius of 7.5 mm and winds one time, the macrobending loss is less than or equal to 0.5 dB at the wavelength of 1550 nm, and the macrobending loss is less than or equal to 1 dB at the wavelength of 1625 nm. When the temperature is in the range of 20 °C to 30 °C, and the relative humidity is in the range of 40 % to 60 %, the anti fatigue parameter of the optical fiber 100 is more than 22%.

In summary, the optical fiber 100 provided by the disclosure has high compatibility, large mode field diameter and insensitivity to bending loss. The original optical fiber has a cladding diameter of 125 µm and a coating diameter of 245 µm which can not meet the current demand of the optical fiber. A current development trends to reduce the size of optical fiber and optical cable, to save pipeline space. The coating diameter of the optical fiber 100 provided by the disclosure can be reduced from 245 µm to 180 µm. It can provide good protection even when the diameter is reduced, which effectively solve the problem of limited space of pipeline resource. And the product has strong designability.

The embodiments shown and described above are only examples. Even though numerous characteristics and advantages of the present technology have been set forth in the foregoing description, together with details of the structure and function of the present disclosure, the disclosure is illustrative only, and changes may be made in the detail within the principles of the present disclosure. It will, therefore, be appreciated that the embodiments described above may be modified within the scope of the claims.

## Claims

1. An optical fiber (100), comprises from inside to outside, a core layer (1), a buffer cladding layer (3), a recessed cladding layer (5), a deep fluorine doped layer (7), an external cladding layer (9), and a coating layer, the core layer (1) is germanium doped silica, a refractive index difference between the core layer (1) and silica is 0.37 % to 0.5 %, a refractive index of the buffer cladding layer (3) gradual changes along the buffer cladding layer (3), a refractive index difference between an internal interface of the buffer cladding layer (3) contacting with the core layer (1) and silica is -0.05 % to 0.1 %, a refractive index of an external interface of the buffer cladding layer (3) contacting with the recessed cladding layer (5) is equal to a refractive index of the recessed cladding layer (5), a refractive index difference between the deep fluorine doped layer (7) and silica is -0.3 % to -0.5 %, the external cladding layer (9) is made of silica, the coating layer is coated outside the external cladding layer (9),
**characterized in that**, a refractive index difference between the recessed cladding layer (5) and silica is -0.12 % to -0.2 % and **in that** the deep fluorine doped layer (7) has a constant refractive index difference.

2. The optical fiber (100) of claim 1, **characterized in that**, a radius of the core layer (1) is 4.1 µm to 4.7 µm, a thickness of the buffer cladding layer (3) is 3 µm to 5 µm, a thickness of the recessed cladding layer (5) is 6 µm to 10 µm, a thickness of the deep fluorine doped layer (7) is 10 µm to 20 µm, and a thickness of the external cladding layer (9) is 22.8 µm to 39.4 µm.

3. The optical fiber (100) of claim 1, **characterized in that**, a non-circularity of the core layer (1) is less than or equal to 1 %, and an overall non-circularity from the core layer (1) to the external cladding layer (9) is less than or equal to 0.4 %.

4. The optical fiber (100) of claim 1, **characterized in that**, the coating layer is made of polyacrylate.

5. The optical fiber (100) of claim 4, **characterized in that**, the coating layer comprises an inner coating layer and an outer coating layer, a non-circularity of the inner coating layer is less than or equal to 6 %, an outer diameter of the outer coating layer is 245 ± 7 µm, and a non-circularity of the outer coating layer is less than or equal to 6 %.

6. The optical fiber (100) of claim 4, **characterized in that**, the coating layer comprises an inner coating layer and an outer coating layer, a non-circularity of the inner coating layer is less than or equal to 6 %, an outer diameter of the outer coating layer is 200 ± 7 µm, and a non-circularity of the outer coating layer is less than or equal to 6 %.

7. The optical fiber (100) of claim 4, **characterized in that**, the coating layer comprises an inner coating layer and an outer coating layer, a non-circularity of the inner coating layer is less than or equal to 6 %, an outer diameter of the outer coating layer is 180 ± 7 µm, and a non-circularity of the outer coating layer is less than or equal to 6 %.

8. The optical fiber (100) of any one of claims 1-7, **characterized in that**, a mode field diameter of the optical fiber (100) at a wavelength of 1310 nm is 8.7 µm to 9.5 µm.

9. The optical fiber (100) of any one of claims 1-7, **characterized in that**, when the optical fiber (100) has a radius of 15 mm and winds ten times, a macrobending loss is less than or equal to 0.03 dB at a wavelength of 1550 nm, and a macrobending loss is less than or equal to 0.1 dB at a wavelength of 1625 nm, when the optical fiber (100) has a radius of 10 mm and winds one time, a macrobending loss is less than or equal to 0.1 dB at a wavelength of 1550 nm, and a macrobending loss is less than or equal to 0.2 dB at a wavelength of 1625 nm, when the optical fiber (100) has a radius of 7.5 mm and winds one time, a macrobending loss is less than or equal to 0.5 dB at a wavelength of 1550 nm, and a macrobending loss is less than or equal to 1 dB at a wavelength of 1625 nm.

10. The optical fiber (100) of any one of claims 1-7, **characterized in that**, when a temperature is in a range of 20 °C to 30 °C and a relative humidity is in a range of 40 % to 60 %, an anti fatigue parameter of the optical fiber (100) is more than 22%.

## Patentansprüche

1. Eine Glasfaser (100), die von innen nach außen eine Kernschicht (1), eine Puffer-Mantelschicht (3), eine abgesenkte Mantelschicht (5), eine tief mit Fluor dotierte Schicht (7), eine äußere Mantelschicht (9) und eine Beschichtungsschicht aufweist, wobei die Kernschicht (1) aus mit Germanium dotiertem Siliziumdioxid besteht, eine Brechungsindexdifferenz zwischen der Kernschicht (1) und Siliziumdioxid 0.37 % bis 0.5 % beträgt, ein Brechungsindex der Puffer-Mantelschicht (3) sich entlang der Puffer-Mantelschicht (3) allmählich ändert, eine Brechungsindexdifferenz zwischen einer inneren Grenzfläche der Puffer-Mantelschicht (3), die mit der Kernschicht (1) in Kontakt steht, und Siliziumdioxid - 0.05 % bis 0.1 % beträgt, ein Brechungsindex einer äußeren Grenzfläche der Puffer-Mantelschicht (3), die mit der abgesenkten Mantelschicht (5) in Kontakt steht, gleich einem Brechungsindex der abgesenkten Mantelschicht (5) ist, eine Brechungsindexdifferenz zwischen der tief mit Fluor dotierten Schicht (7) und Siliziumdioxid -0.3 % bis -0.5 % beträgt, die äußere Mantelschicht (9) aus Siliziumdioxid besteht, die Beschichtungsschicht außerhalb der äußeren Mantelschicht (9) aufgebracht ist,
**dadurch gekennzeichnet, dass** eine Brechungsindexdifferenz zwischen der abgesenkten Mantelschicht (5) und Siliziumdioxid -0.12 % bis -0.2 % beträgt und dass die tief mit Fluor dotierte Schicht (7) eine konstante Brechungsindexdifferenz aufweist.

2. Glasfaser (100) nach Anspruch 1, **dadurch gekennzeichnet, dass** ein Radius der Kernschicht (1) 4.1 µm bis 4.7 µm beträgt, eine Dicke der Puffer-Mantelschicht (3) 3 µm bis 5 µm beträgt, eine Dicke der abgesenkten Mantelschicht (5) 6 µm bis 10 µm beträgt, eine Dicke der tief mit Fluor dotierten Schicht (7) 10 µm bis 20 µm beträgt und eine Dicke der äußeren Mantelschicht (9) 22.8 µm bis 39.4 µm beträgt.

3. Glasfaser (100) nach Anspruch 1, **dadurch gekennzeichnet, dass** eine Unrundheit der Kernschicht (1) höchstens 1 % beträgt und eine Gesamtunrundheit von der Kernschicht (1) bis zur äußeren Mantelschicht (9) höchstens 0.4 % beträgt.

4. Glasfaser (100) nach Anspruch 1, **dadurch gekennzeichnet, dass** die Beschichtungsschicht aus Polyacrylat besteht.

5. Glasfaser (100) nach Anspruch 4, **dadurch gekennzeichnet, dass** die Beschichtungsschicht eine innere Beschichtungsschicht und eine äußere Beschichtungsschicht umfasst, wobei eine Unrundheit der inneren Beschichtungsschicht höchstens 6 % beträgt, ein Außendurchmesser der äußeren Beschichtungsschicht 245 ± 7 µm beträgt und eine Unrundheit der äußeren Beschichtungsschicht höchstens 6 % beträgt.

6. Glasfaser (100) nach Anspruch 4, **dadurch gekennzeichnet, dass** die Beschichtungsschicht eine innere Beschichtungsschicht und eine äußere Beschichtungsschicht umfasst, wobei eine Unrundheit der inneren Beschichtungsschicht höchstens 6 % beträgt, ein Außendurchmesser der äußeren Beschichtungsschicht 200 ± 7 µm beträgt und eine Unrundheit der äußeren Beschichtungsschicht höchstens 6 % beträgt.

7. Glasfaser (100) nach Anspruch 4, **dadurch gekennzeichnet, dass** die Beschichtungsschicht eine innere Beschichtungsschicht und eine äußere Beschichtungsschicht umfasst, wobei eine Unrundheit der inneren Beschichtungsschicht höchstens 6 % beträgt, ein Außendurchmesser der äußeren Beschichtungsschicht 180 ± 7 µm beträgt und eine Unrundheit der äußeren Beschichtungsschicht höchstens 6 % beträgt.

8. Glasfaser (100) nach einem der Ansprüche 1 bis 7, **dadurch gekennzeichnet, dass** ein Modenfelddurchmesser der Glasfaser (100) bei einer Wellenlänge von 1310 nm 8.7 µm bis 9.5 µm beträgt.

9. Glasfaser (100) nach einem der Ansprüche 1 bis 7, **dadurch gekennzeichnet, dass**, wenn die Glasfaser (100) einen Radius von 15 mm aufweist und zehnmal gewickelt ist, ein Makrobiegeverlust bei einer Wellenlänge von 1550 nm höchstens 0.03 dB beträgt und ein Makrobiegeverlust bei einer Wellenlänge von 1625 nm höchstens 0.1 dB beträgt, wenn die Glasfaser (100) einen Radius von 10 mm aufweist und einmal gewickelt ist, ein Makrobiegeverlust bei einer Wellenlänge von 1550 nm höchstens 0.1 dB beträgt und ein Makrobiegeverlust bei einer Wellenlänge von 1625 nm höchstens 0.2 dB beträgt, wenn die Glasfaser (100) einen Radius von 7.5 mm aufweist und einmal gewickelt ist, ein Makrobiegeverlust bei einer Wellenlänge von 1550 nm höchstens 0.5 dB beträgt und ein Makrobiegeverlust bei einer Wellenlänge von 1625 nm höchstens 1 dB beträgt.

10. Glasfaser (100) nach einem der Ansprüche 1 bis 7, **dadurch gekennzeichnet, dass**, wenn eine Temperatur in einem Bereich von 20 °C bis 30 °C und eine relative Luftfeuchtigkeit in einem Bereich von 40 % bis 60 % liegt, ein Ermüdungsparameter der Glasfaser (100) mehr als 22 % beträgt.

## Revendications

1. Une fibre optique (100), comprenant de l'intérieur vers l'extérieur, une couche de cœur (1), une couche de gaine tampon (3), une couche de gaine en creux (5), une couche profondément dopée au fluor (7), une couche de gaine externe (9), et une couche de revêtement, la couche de cœur (1) étant en silice dopée au germanium, une différence d'indice de réfraction entre la couche de cœur (1) et la silice étant de 0.37 % à 0.5 %, un indice de réfraction de la couche de gaine tampon (3) changeant progressivement le long de la couche de gaine tampon (3), une différence d'indice de réfraction entre une interface interne de la couche de gaine tampon (3) en contact avec la couche de cœur (1) et la silice étant de -0.05 % à 0.1 %, un indice de réfraction d'une interface externe de la couche de gaine tampon (3) en contact avec la couche de gaine en creux (5) étant égal à un indice de réfraction de la couche de gaine en creux (5), une différence d'indice de réfraction entre la couche profondément dopée au fluor (7) et la silice étant de -0.3 % à -0.5 %, la couche de gaine externe (9) étant en silice, la couche de revêtement étant appliquée à l'extérieur de la couche de gaine externe (9),
**caractérisée en ce que**, une différence d'indice de réfraction entre la couche de gaine en creux (5) et la silice est de -0.12 % à -0.2 % et **en ce que**
la couche profondément dopée au fluor (7) a une différence d'indice de réfraction constante.

2. La fibre optique (100) selon la revendication 1, **caractérisée en ce que**, un rayon de la couche de cœur (1) est de 4.1 µm à 4.7 µm, une épaisseur de la couche de gaine tampon (3) est de 3 µm à 5 µm, une épaisseur de la couche de gaine en creux (5) est de 6 µm à 10 µm, une épaisseur de la couche profondément dopée au fluor (7) est de 10 µm à 20 µm, et une épaisseur de la couche de gaine externe (9) est de 22.8 µm à 39.4 µm.

3. La fibre optique (100) selon la revendication 1, **caractérisée en ce que**, une non-circularité de la couche de cœur (1) est inférieure ou égale à 1 %, et une non-circularité globale de la couche de cœur (1) à la couche de gaine externe (9) est inférieure ou égale à 0.4 %.

4. La fibre optique (100) selon la revendication 1, **caractérisée en ce que**, la couche de revêtement est en polyacrylate.

5. La fibre optique (100) selon la revendication 4, **caractérisée en ce que**, la couche de revêtement comprend une couche de revêtement interne et une couche de revêtement externe, une non-circularité de la couche de revêtement interne étant inférieure ou égale à 6 %, un diamètre extérieur de la couche de revêtement externe étant de 245 ± 7 µm, et une non-circularité de la couche de revêtement externe étant inférieure ou égale à 6 %.

6. La fibre optique (100) selon la revendication 4, **caractérisée en ce que**, la couche de revêtement comprend une couche de revêtement interne et une couche de revêtement externe, une non-circularité de la couche de revêtement interne étant inférieure ou égale à 6 %, un diamètre extérieur de la couche de revêtement externe étant de 200 ± 7 µm, et une non-circularité de la couche de revêtement externe étant inférieure ou égale à 6 %.

7. La fibre optique (100) selon la revendication 4, **caractérisée en ce que**, la couche de revêtement comprend une couche de revêtement interne et une couche de revêtement externe, une non-circularité de la couche de revêtement interne étant inférieure ou égale à 6 %, un diamètre extérieur de la couche de revêtement externe étant de 180 ± 7 µm, et une non-circularité de la couche de revêtement externe étant inférieure ou égale à 6 %.

8. La fibre optique (100) selon l'une quelconque des revendications 1 à 7, **caractérisée en ce que**, un diamètre de champ de mode de la fibre optique (100) à une longueur d'onde de 1310 nm est de 8.7 µm à 9.5 µm.

9. La fibre optique (100) selon l'une quelconque des revendications 1 à 7, **caractérisée en ce que**, lorsque la fibre optique (100) a un rayon de 15 mm et est enroulée dix fois, une perte par macrocourbure est inférieure ou égale à 0.03 dB à une longueur d'onde de 1550 nm, et une perte par macrocourbure est inférieure ou égale à 0.1 dB à une longueur d'onde de 1625 nm, lorsque la fibre optique (100) a un rayon de 10 mm et est enroulée une fois, une perte par macrocourbure est inférieure ou égale à 0.1 dB à une longueur d'onde de 1550 nm, et une perte par macrocourbure est inférieure ou égale à 0.2 dB à une longueur d'onde de 1625 nm, lorsque la fibre optique (100) a un rayon de 7.5 mm et est enroulée une fois, une perte par macrocourbure est inférieure ou égale à 0.5 dB à une longueur d'onde de 1550 nm, et une perte par macrocourbure est inférieure ou égale à 1 dB à une longueur d'onde de 1625 nm.

10. La fibre optique (100) selon l'une quelconque des revendications 1 à 7, **caractérisée en ce que**, lorsqu'une température est dans une plage de 20 °C à 30 °C et une humidité relative est dans une plage de 40 % à 60 %, un paramètre de résistance à la fatigue de la fibre optique (100) est supérieur à 22 %.
